# EUROPEAN PATENT APPLICATION

(11) **EP 2 437 553 A2**
(43) Date of publication of application: **04.04.2012**
(21) Application number: 11192702.6
(22) Date of filing: 16.03.2004
(51) Int. Cl.: H04W 48/18

(54) **Mobile phone and method for connecting to a preferred communication system among a plurality of communication systems with different radio frequency bands**

(30) Priority: 24.03.2003 JP 2003081476
(62) Divisional of application: 04006208.5
(71) Applicant: NEC Corporation, Tokyo 108-8001 (JP)
(72) Inventor: Namiki, Hideo, Tokyo, 108-8001 (JP); Oomori, Yoshiaki, Tokyo, 108-8001 (JP)
(74) Representative: Splanemann

(57) **Abstract**

The mobile phone can connect to a preferred connected communication system A and a non-preferred communication system B. When the mobile phone connects to system A, if the detected received electric field intensity is less than a first threshold, the mobile phone connects to system B. When the mobile phone connects to system B, if the detected received electric field intensity is larger than a second threshold, the mobile phone connects to system A. The second threshold is set as larger than the first threshold, therefore, the frequency of switching between the communication systems is reduced.

## Description

### BACKGROUND OF THE INVENTION

### 1. Field of the Invention

The present invention relates to a mobile phone and a method, and more particularly, to a mobile phone for connecting to a preferred communication system among a plurality of communication systems with different frequency bands.

### 2. Description of the related art

Mobile phones that can connect to a plurality of communication systems with different radio frequency bands are well know. A conventional mobile phone selects a preferred communication system predetermined by a user or a communication service operator among a plurality of communication systems.

One such conventional mobile phone is described in the Japanese Patent Application Publication Laid-Open Kokai No. H6-188830.

In this publication, the mobile phone stores the selection order for communication systems, other than a home system, so that it can connect to a preferred communication system other than a home system. When the mobile phone cannot connect to a home system because it is located outside a service range of a home system, it tries to scan for a radio frequency band based on the stored order. If a communication system that is to be connected is found, the mobile phone connects to that communication system. Therefore, the mobile phone can connect to a preferred communication system, other than a home system, determined by the stored order as a ROAMING system.

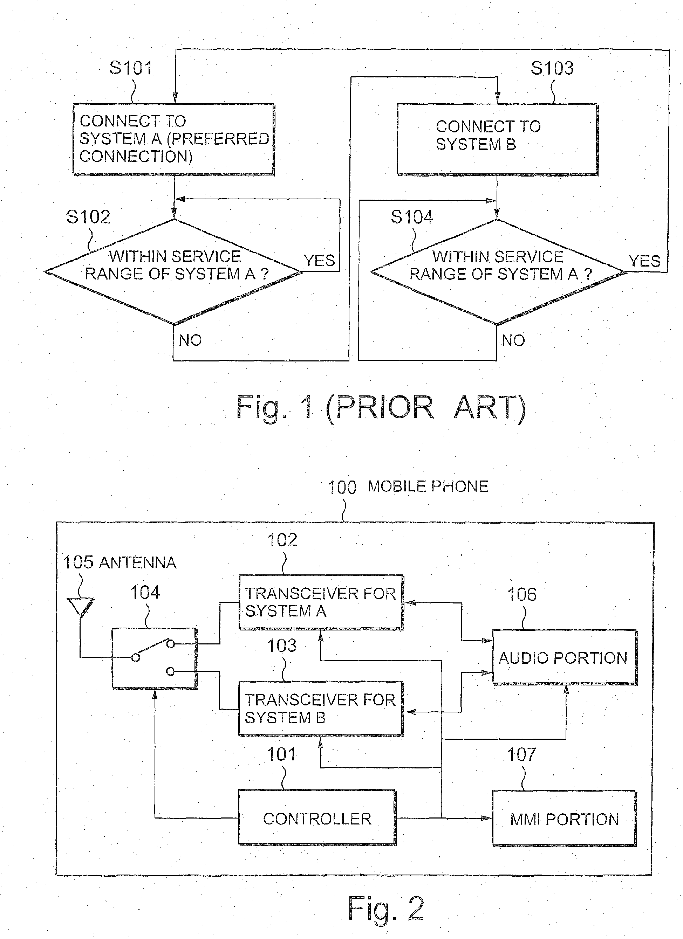

The operation of another related phone is shown in Fig. 1. Fig. 1 is a flowchart describing a mobile phone switching connection to a preferred communication system from a non-preferred communication system while connecting to the non-preferred communication system. In fig. 1, a mobile phone can connect to systems A and B, and preferably connects to system A as a preferred communication system.

While system A is connected (S101), an electric field intensity received from a base station of system A is periodically detected. Based on the detection, it is determined whether system A can be connected, that is, whether or not a mobile phone is located within the service range of system A (S102). When the electric field intensity of system

A deteriorates and it is determined that the connection is disabled, namely, a mobile phone is located outside the service range, system B is connected (S103). On the other hand, if it is determined that a mobile phone is located within the service range, the determination of step S 102 is repeated.

While system B is connected (S 103), the electric field intensity received from a base station of system A is periodically detected. Based on the detection, it is determined whether or not system A can be connected, that is, whether or not a mobile phone is located within the service range of system A (S 104). When it is determined that a mobile phone is located within the range, system A is connected (S101). If not, the determination of step S 104 is repeated.

As a result, a mobile phone can be preferably connected to system A and can also be connected to system B, which has a different radio frequency band from system A.

The operation of the phone described in fig. 1, however, has a problem such that the connection between the communication systems sometimes occurs frequently and communication becomes unstable.

### SUMMARY OF THE INVENTION

The object of the present invention is to provide an improved mobile phone.

Another object of the present invention is to provide a mobile phone that can smoothly and stably connect to a plurality of communication systems.

In order to achieve the foregoing objects, a method of the present invention includes the following steps: (1) determining if the mobile phone is located outside a service range of a preferred communication system based on a first criterion while connecting to the preferred communication system; (2) connecting to a non-preferred communication system based on the determination in (1); (3) determining if the mobile phone is located within a service range of the preferred communication system based on a second criterion that is different from the first criterion while connecting to the non-preferred communication system; and (4) connecting to the preferred communication system based on the determination in (3). In a method of the present invention, the different criterion may be set so that the connection in (4) does not frequently occur compared with the connection in (2). Moreover, the criterion is a threshold of received electric field intensity. Still furthermore preferably, the threshold of received electric field intensity may be determined so that the threshold relating to the determination in (3) is higher than the threshold relating to the determination in (1).

In a method of the present invention, the connection in (2) may be made if the mobile phone is located outside a service range of a preferred communication system continuously for a predetermined time period. The determination in (3) may be made while the mobile phone is connected to the non-preferred communication system, if the connection continues for a predetermined time period, as well.

Another embodiment of a method of the present invention includes the following steps:
(1) determining if the mobile phone is located outside a service range of a preferred communication system while connecting to the preferred communication system;
(2) connecting to a non-preferred communication system based on the determination in (1);
(3) determining if the mobile phone is located within a service range of the another communication system while connecting to the non-preferred communication system; (4) when it is determined in (3) that the mobile phone is located within a service range of the non₋preferred communication system, determining if the mobile phone is located within a service range of the preferred communication system based on a first criterion; (5) connecting to the preferred communication system based on the determination in (4); (6) when it is determined in (3) that the mobile phone is located outside a service range of the non-preferred communication system, determining if the mobile phone is located within a service range of the preferred communication system based on a second criterion that is different from the first criterion; and (7) connecting to the preferred communication system based on the determination in (6). In the present invention, the first and second criteria may be set so that the connection in (5) does not frequently occur compared with the connection in (7). The first and second criteria may be a threshold of received electric field intensity. Furthermore, the threshold of received electric field intensity may be determined so that the first criteria is higher than the second criteria. Moreover, the connection in (2) may be made if the mobile phone is located outside a service range of the preferred communication system continuously for a predetermined time period. The determination in (4) and (6) may be made while the mobile phone is connected to the non-preferred communication system, if the connection continues for a predetermined time period, as well.

Another embodiment of a method of the present invention includes the following steps: (1) determining based on a first criterion if the mobile phone is located outside a service range of a preferred communication system while connecting to the preferred communication system; (2) determining if a predetermined time period passes; (3) determining based on a second criterion that is different from the first criterion if the mobile phone is located outside a service range of a preferred communication system within the predetermined time period; (4) connecting to a non-preferred communication system when the mobile phone is located outside a service range of the preferred communication system continuously for a predetermined time period; (5) determining if the mobile phone is located within a service range of the preferred communication system while connecting to the non-preferred communication system; and (6) connecting to the preferred communication system based on the determination in (5).

The first and second criteria may be threshold of received electric field intensity. The threshold of received electric field intensity may be determined so that the threshold relating to the determination in (3) is higher than the threshold relating to the determination in (1).

A mobile phone of the present invention includes: first determination means for determining if the mobile phone is located outside a service range of a preferred communication system while connecting to the preferred communication system; first connection means for connecting to a non-preferred communication system based on the determination of the first determination means; second determination means for determining if the mobile phone is located within a service range of the preferred communication system while connecting to the non-preferred communication system; and second connecting means for connecting to the preferred communication system based on the determination of the second determination means; wherein the first and second determination means may use different criterion to determine if the mobile phone is located within a service range of the preferred communication system. Furthermore, the different criteria are set so that the connection relating to the second connection means does not frequently occur as compared with the connection relating to the first connection means. The criterion may be a threshold of received electric field intensity. Moreover, the threshold of received electric field intensity may be determined so that the threshold relating to the second determination means is higher than the threshold relating to the first determination means. In the present invention, the first connection means may connect the mobile phone to the non-preferred communication system if the mobile phone is located outside a service range of the preferred communication system continuously for a predetermined time period. The second determination means may determine if the mobile phone is located within a service range of the preferred communication system while the mobile phone is connected to the non-preferred communication system and the connection continues for a predetermined time period, as well.

Another embodiment of a mobile phone of the present invention includes: first determination means for determining if the mobile phone is located outside a service range of a preferred communication system while connecting to the preferred communication system; first connection means for connecting to a non-preferred communication system based on the determination of the first determination means; second determination means for determining if the mobile station is located within a service range of the non-preferred communication system while connecting to the non-preferred communication system; third determination means for determining if the mobile phone is located within a service range of the preferred communication system based on a first criterion, if it is determined by the second determination means that the mobile phone is located within a service range of the non-preferred communication system; second connection means for connecting to the preferred communication system based on the determination of the third determination means; fourth determination means for determining if the mobile phone is located within a service range of the preferred communication system based on a second criterion that is different from the first criterion when it is determined by the second determination means that the mobile phone is located outside a service range of the non-preferred communication system, and third connection means for connecting to the preferred communication system based on the determination by the fourth determination means. In the mobile phone of the present invention, the first and second criteria may be set so that the connection relating to the second connection means does not frequently occur as compared with connection relating to the third connection means. Furthermore, the criteria may be threshold of received electric field intensity. The threshold of received electric field intensity may be determined so that the threshold relating to the third determination means is higher than the threshold relating to the fourth determination means. Moreover, the first connection means may connect the mobile phone to the non-preferred communication system if the mobile phone is located outside a service range of a preferred communication system continuously for a predetermined time period. The third and fourth determination means may determine if the mobile phone is located within a service range of the preferred communication system while the mobile phone is connected to the non-preferred communication system if the connection continues for a predetermined time period, as well.

Another embodiment of the present invention includes: first determination means for determining based on a first criterion if the mobile phone is located outside a service range of a preferred communication system while connecting to the preferred communication system; second determination means for determining if a predetermined time period passes; third determination means for determining based on a second criterion that is different from said first criterion if the mobile phone is located outside a service range of a preferred communication system within the predetermined time period; first connection means for connecting to a non-preferred communication system when the mobile phone is located outside a service range of the preferred communication system continuously for a predetermined time period; fourth determination means for determining if the mobile phone is located within a service range of the preferred communication system while connecting to said non-preferred communication system; and second connection means for connecting to the preferred communication system based on the determination of said fourth determination means. The first and second criteria may be threshold of received electric field intensity. The threshold of received electric field intensity may be determined so that the threshold relating to the third determination means is higher than the threshold relating to the first determination means.

Another embodiment of the present invention includes: first determination circuit for determining if the mobile phone is located outside a service range of a preferred communication system while connecting to the preferred communication system; first switch for connecting to a non-preferred communication system based on the determination of the first determination circuit; second determination circuit for determining if the mobile phone is located within a service range of the preferred communication system while connecting to the non-preferred communication system; and second switch for connecting to the preferred communication system based on the determination of the second determination circuits; wherein the first and second determination circuits use different criterion to determine if the mobile phone is located within a service range of the preferred communication system. In a mobile phone of the present invention, the different criteria may be set so that the connection relating to the second switch does not frequently occur as compared with said connection relating to the first switch. Furthermore, the criteria may be a threshold of received electric field intensity. More over, the threshold of received electric field intensity may be determined so that the threshold relating to said second determination circuit is higher than the threshold relating to the first determination circuit.

In a mobile phone of the present invention, the first switch may connect to the non-preferred communication system if the mobile phone is located outside a service range of the preferred communication system continuously for a predetermined time period. Still further more, the second determination circuit may determine if the mobile phone is located within a service range of the preferred communication system when the mobile phone is connected to the non-preferred communication system if the connection continues for a predetermined time period.

Still another embodiment of the present invention includes: first determination circuit for determining if the mobile phone is located outside a service range of a preferred communication system while connecting to the preferred communication system; first switch for connecting to a non-preferred communication system based on the determination of the first determination circuit; second determination circuit for determining if the mobile phone is located within a service range of the non-preferred communication system while connecting to the non-preferred communication system; third determination circuit for determining if the mobile phone is located within a service range of the preferred communication system based on a first criterion, if it is determined by the second determination circuit that the mobile phone is located within a service range of the non-preferred communication system; second switch for connecting to the preferred communication system based on the determination of the third determination circuit; fourth determination circuit for determining if the mobile phone is located within a service range of the preferred communication system based on a second criterion that is different from the first criterion, when it is determined by the second determination circuit that the mobile phone is located outside a service range of the non-preferred communication system; and third switch for connecting to the preferred communication system based on the determination by the fourth determination circuit.

The first and second criteria may be set so that the connection relating to the second connection means does not frequently occur as compared with the connection relating to said third connection circuits. Furthermore, the criteria may be a threshold of received electric field intensity. More over, the threshold of received electric field intensity may be determined so that the threshold relating to the third determination circuit is higher than the threshold relating to the fourth determination circuit. Still furthermore, the first switch may connect to the non-preferred communication system if the mobile phone is located outside a service range of a preferred communication system continuously for a predetermined time period. The third and fourth determination circuits may determine if said mobile phone is located within a service range of the preferred communication system when the mobile phone is connected to the non-preferred communication system if the connection continues for a predetermined time period.

Another embodiment of the present invention includes: a first determination circuit for determining based on a first criterion if the mobile phone is located outside a service range of a preferred communication system while connecting to the preferred communication system; a second determination circuit for determining if a predetermined time period passes; a third determination circuit for determining based on a second criterion that is different from the first criterion if said mobile phone is located outside a service range of a preferred communication system within said predetermined time period; a first switch for connecting to a non-preferred communication system when the mobile phone is located outside a service range of said preferred communication system continuously for a predetermined time period; fourth determination circuit for determining if the mobile phone is located within a service range of the preferred communication system while connecting to the non-preferred communication system; and a second switch for connecting to the preferred communication system based on the determination of the fourth determination means. The first and second criteria may be threshold of received electric field intensity. The threshold of received electric field intensity may be determined so that the threshold relating to the third determination circuit is higher than the threshold relating to the first determination circuit.

### BRIEF DESCRIPTION OF THE DRAWINGS

These and other objects, features and advantages of the invention will be become fully apparent from the following detailed description taken in conjunction with accompanying drawings.
Fig. 1 is a flowchart of a phone related to the present invention describing a mobile phone switching connection to a preferred communication system from a non-preferred communication system while connecting to the non-preferred communication system.
Fig. 2 is a block diagram schematically showing a configuration of a preferred embodiment of a mobile phone according to the present invention.
Fig. 3 is a flowchart of a preferred embodiment of the present invention showing a mobile phone switching connection to a preferred communication system from a non-preferred communication system while connecting to the non-preferred communication system.
Fig. 4 is a flowchart of a preferred example according to a preferred embodiment of the present invention to explain the detailed operation shown in fig. 3.
Fig. 5 is a flowchart of a second embodiment of the present invention showing a mobile phone switching connection to a preferred communication system from a non-preferred communication system during connecting to the non-preferred communication system.
Fig. 6 is a flowchart of a third embodiment of the present invention showing a mobile phone switching connection to a preferred communication system from a non-preferred communication system during connecting to the non-preferred communication system.

### DETAILED DESCRIPTION OF THE PREFERRED EMBODIMENTS

Fig. 2 shows a block diagram schematically showing the configuration of a preferred embodiment of a mobile phone according to the present invention.

Referring to fig. 2, mobile phone 100 includes controller 101, transceiver for system A 102, transceiver for system B 103, antenna switch 104, antenna 105, audio portion 106, and MMI (man-machine interface) portion 107.

Transceiver for system A 102 communicates with a base station of system A (not shown) through antenna 105. Transceiver for system A has general functions associated with an ordinary transceiver including at least modulation, demodulation and amplification functions. The details about the functions of transceiver for system A 102 are omitted because they are well known in the art. System A is a preferred connected communication system which is predetermined by a user or a service operator such as a home system, for example. Generally, the communication fee for a home system is less than the fee for a ROAMING system. Therefore, a user wants to use system A for communication if a connection to system A is available.

Transceiver for system B 103 communicates with a base station of system B (not shown) through antenna 105. Transceiver for system B also has general functions associated with an ordinary transceiver just like transceiver for system A. System B is a non-preferred connected communication system, such as a ROAMING system, for example.

Systems A and B have different radio frequency bands. Transceivers 102 and 103 are controlled by controller 101. When the communication system to which mobile phone 100 is to be connected is selected, the selected transceiver 102 or 103 is operated and executes voice communications or data processing when data communication is made. In data communication, an external interface for connecting to a personal computer is required in place of the audio portion 106.

Antenna switch 104 is controlled by controller 101 and switches the transceiver 102 or 103 so that the selected system A or B is operated. Antenna 105 receives and transmits a radio signal from and to base stations of systems A and B. Audio portion 106 inputs and outputs voice from and to a user. MMI portion 107 is organized with operation keys and a display, for example.

Controller 101 is constituted by a CPU and controls each portion of mobile phone 100. Particularly, controller 101 detects electric field intensity of the received radio signal from base stations of systems A and B and compares the detected electric field intensity with a predetermined threshold. Furthermore, controller 101 detects whether or not synchronization is established with base stations of systems A and B. Controller 101 determines whether or not communication is enabled with system A or B based on the comparison result of the electric filed intensity with the threshold and the detected synchronization with system A or B.

Next, the detail operation of controller 101 of mobile phone 100, according to a preferred embodiment, will be described.

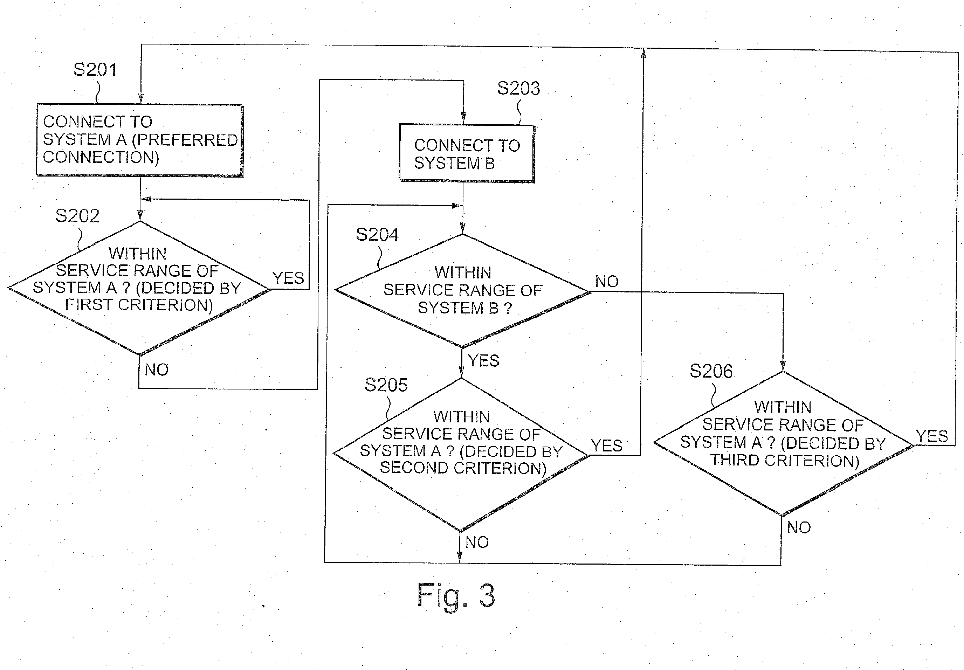

Fig. 3 shows a flowchart of a preferred embodiment of the present invention showing mobile phone 100 switching connection to a preferred communication system from a non-preferred communication system while connecting to the non-preferred communication system.

Referring to Fig. 3, while system A is connected (5201), the electric field intensity received from a base station of system A is periodically detected. It is then determined whether or not system A can be connected, namely whether or not mobile phone 100 is located within its service range (S202). If it is determined that mobile phone 100 is located within the service range of system A, the connection to system A is held and when it is determined that mobile phone 100 is located outside the service range, the connected communication system is switched from system A to system B (S203).

While system B is connected (S203), it is periodically determined whether or not mobile phone 100 is located within the service range of system B (S204). If it is determined that mobile phone 100 is located within the service range of system B, the electric field intensity received from a base station of system A is periodically detected and a determination of whether or not mobile phone 100 is located within the service range of system A is made (S205). The determination of step S205 is made using a different criterion from step S202. Additional details will be discussed later.

In step S204, if it is determined that mobile phone 100 is located outside the service range of system B, the electric field intensity of system A is periodically detected and the determination of whether or not mobile phone 100 is located within the service range of system A is made (S206). The determination of step S206 is made using a different criterion from steps S202 and S205. Additional details will be discussed later.

If it is determined that mobile phone 100 is located within the service range of system A (S205, S206), the connected system is switched from system B to system A (S201). On the other hand, if it is determined that mobile phone 100 is located outside the service range, the connection to system B is held and the similar operation is periodically continued.

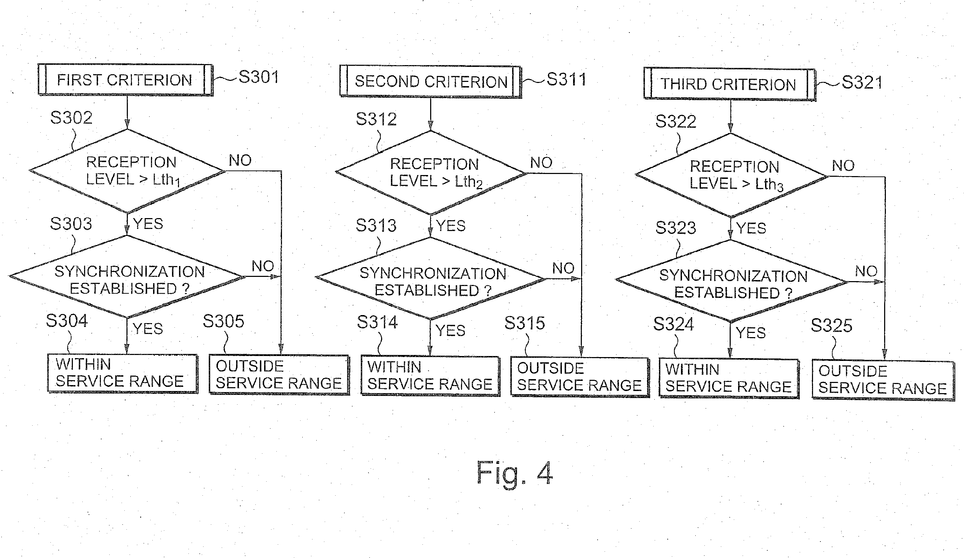

Fig. 4 shows a flowchart of a preferred embodiment of the present invention that explains detailed operation shown in fig. 3.

The determination in step S202 is based on the first criterion (S301). Transceiver 102 for system A first measures electric field intensity received from a base station of system A and controller 101 determines whether or not a value of the measured electric field intensity is larger than a first threshold Lth1 (S302). When "the measured value > Lth1" is not met, controller 101 determines that mobile phone 100 is located outside the service range of system A (S305). If the measured value is larger than Lth1, controller 101 executes processing for synchronization with a base station of system A and determines synchronization based upon continuously received data (S303). If synchronization is established as a result of the synchronization determination, it is determined that mobile phone 100 is located within the service range of system A (S304) and if synchronization is not established, it is determined that mobile phone 100 is located outside the service range (S305).

The determination in step S204 is based on the second criterion (S311). First, received electric field intensity is measured and controller 101 determines whether or not a value of the measured receive electric field intensity is larger than a second threshold Lth2 (S312). When "the measured value > Lth2" is not met, controller 101 determines that the mobile phone 100 is located outside the service range of system A (S315). If the measured value is larger than Lth2, controller 101 executes processing for synchronization with a base station of system A and determines synchronization based upon continuously received data (S313). If synchronization is established as a result of the synchronization determination, controller 101 determines that mobile phone 100 is located within the service range of system A (S314). On the other hand, if synchronization is not established, controller 101 determines that mobile phone 100 is located outside the service range (S315).

The determination in step S206 is based on the third criterion (S321). First, electric field intensity is measured and controller 101 determines whether or not a value of the measured receive electric field intensity is larger than a third threshold Lth3 (S322). If "the measured value > Lth3" is not met, controller 101 determines that mobile phone 100 is located outside the service range of system A (S325). If the measured value is larger than Lth3, controller 101 executes processing for synchronization with a base station of system A and determines synchronization based upon continuously received data (S323). If synchronization is established as a result of the synchronization determination, controller 101 determines that mobile phone 100 is located within the service range of system A (S324) and if synchronization is not established, controller 101 determines that mobile phone 100 is located outside the service range (S325).

The first and the second criteria are different in a threshold of a receive electric field intensity (S302 and S312) such as Lth2 = Lth1 + Lx1 (Lx1 > 0). As a result, the threshold Lth2, which is used when mobile phone 100 connects to system B, is larger than the threshold Lth1 which is used when mobile phone 100 connects to system A (Lth1 < Lth2).

Furthermore, the second and the third criterion are similarly different in a threshold of a receive electric field intensity (S312 and S322) such that Lth3 = Lth1 + Lx2 (Lx1 > Lx2 > 0). As a result, the threshold Lth3, which is used when mobile phone 100 is located outside the service range of system B, is smaller than the threshold Lth2, which is used when mobile phone 100 is located within the service range of system B, (Lth2 > Lth3). Since the threshold when mobile phone 100 is located outside the service range of system B is set small, transition to system A at a lower level is enabled, as compared with the threshold when mobile phone 100 is located within the service range of system B. In the second embodiment, the thresholds are set as Lth2 > Lth3 >Lth1. Therefore, the problem of switching between the systemscan be reduced and a stable condition of communication can be secured.

The relationship between the magnitude among the first to the third thresholds is not limited to the above-mentioned relationships.

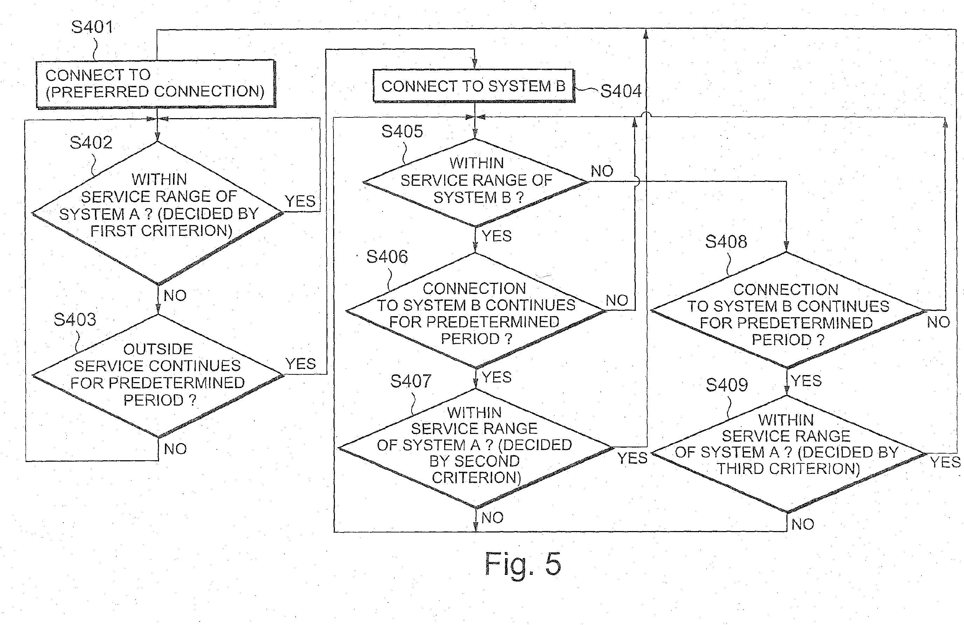

Next, a second embodiment of the present invention will be described. Fig. 5 shows a flowchart of the second embodiment of the present invention.

Referring to fig. 5, while system A is connected (S401), electric field intensity received from a base station of system A is detected and controller 101 determines whether or not mobile phone 100 is located within the service range of system A based upon whether or not a value of the detected receive electric field intensity is larger than a first threshold Ltha (S402). If "the detected value > Ltha" is met, it is continuously determined whether or not mobile phone 100 is located within the service range of system A (S402). If "the measured value > Ltha" is not met, it is determined whether or not mobile phone 100 is located outside the service range for the predetermined time period (S403).

When it is determined that mobile phone 100 is located outside the service range of system A continuously for the predetermined time period, system B is connected (S404). On the other hand, if it is determined that mobile phone 100 is not located outside the service range of system A continuously for the predetermined time period, the determination as to whether or not mobile phone 100 is within the service range of system A continues.

After connecting to system B (S404), it is determined whether or not mobile phone 100 is located within the service range of the system B (S405).

When it is determined that mobile phone 100 is located within the service range of system B, it is determined whether or not the connection to system B continues for the predetermined time period (S406). If the connection to system B does not continue for the predetermined time period, the process goes back to step S405. On the other hand, if the connection to system B continues for the predetermined time period, electric field intensity of system A is periodically detected and determination of whether or not mobile phone 100 is located within the service range of system A is made based upon whether or not a value of receive electric field intensity is larger than the second threshold Lthb (S407).

When it is determined that mobile phone 100 is located within the service range of system A, mobile phone 100 is connected to system A (S401) and when it is determined that mobile phone 100 is located outside the service range of system A, it is determined whether or not mobile phone 100 is located within the service range of system B (S405).

When it is determined in step S405 that mobile phone 100 is located outside the service range of system B, a determination of whether or not the connection to system B continues for the predetermined time period is made (S408). If the connection to system B does not continue for the predetermined time period, the process goes back to step S405. On the other hand, if the connection to system B continues for the predetermined time period, determination of whether or not mobile phone 100 is located within the service range of system A is made based upon whether a value of the receive electric field intensity is larger than a third threshold Lthc (S409). When it is determined that mobile phone 100 is located within the service range of system A, the mobile phone 100 is connected to system A (S401) and when it is determined that mobile phone 100 is located outside the service range of system A, it is determined whether or not mobile phone 100 is located within the service range of system B (S405).

The relationship between the first threshold and the second threshold is "Lthb = Ltha + Lxa (Lxa > 0)" for example, and the relationship between the first threshold and the third threshold is "Lthc = Ltha + Lxb (Lxa > Lxb > 0)" for example. That is, the first to the third thresholds have the relationship of "Lthb > Lthc > Ltha". However, The relationship in magnitude among the first to the third thresholds is not limited to the above-mentioned relations.

According to the second embodiment, the connection to system B is not immediately made even if it is determined that mobile phone 100 is located outside the service range of system A. That is, the connection from system A to system B is made when it is determined that mobile phone 100 is located outside the service range of the system A continuously for the predetermined time period. Therefore, the problem of connecting frequently between the systems can be reduced. Besides, while system B is connected, the condition of system A is periodically detected. However, a problem that the connection to system A occurs immediately after connecting from system A to system B can be reduced by starting the detection of a condition of system A after the predetermined time period elapses without detecting immediately after the connection to system B.

In step 407, the threshold Lthb is used and "Lthb = Ltha + Lxa (Lxa > 0)" is set.

Lxa is not a fixed value but may be also a parameter that varies according to a radio situation of system B. As a result, a more stable selection of service is enabled. For example, the reduction of the problem in frequently connection between the systems to be solved by the invention and transition to system A before mobile phone 100 moves outside the range of system B can be simultaneously realized by setting a large value to Lxa when mobile phone 100 is located within the service range of system B and when an electric field intensity is satisfactory and setting a small value to Lxa in case a situation of an electric field intensity is bad.

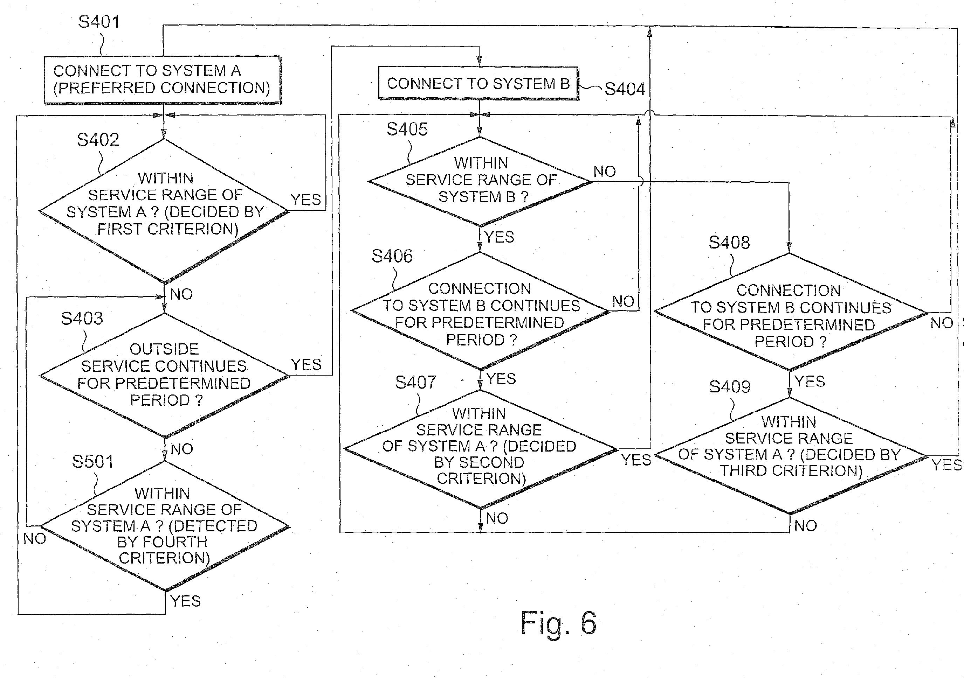

A third embodiment of the present invention will be described next. Fig. 6 shows a flowchart of the third embodiment of the present invention. Referring to fig. 6, a difference from the second embodiment shown in fig. 5 is that step S501 is added to the third embodiment. In step S501, electric field intensity received from a base station of system A is detected and controller 101 determines whether or not mobile phone 100 is located within the service range of system A based on whether or not a value of the detected received electric field is larger than a fourth threshold Lthd. The fourth threshold is "Lthd = Ltha + X (X> 0)" for example.

In embodiments of the present invention, mobile phone 100, which can connect to the two different systems A and B, is described. However, mobile phone 100 of the present invention may connect to more than two systems. Furthermore, in the embodiments, mobile phone 100 uses electric field intensity received from a base station to determine whether or not it is located within a service range. However, mobile phone 100 may use bit error rate (BER) to perform that determination.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments without the use of inventive faculty. Therefore, the present invention is not intended to be limited to the embodiments described herein but is to be accorded the widest scope as defined by the limitations of the claims and equivalents.

## Claims

1. A method for a mobile phone, comprising:
(1) determining based on a first criterion if said mobile phone is located outside a service range of a preferred communication system while connecting to said preferred communication system_{;}
(2) determining if a predetermined time period passes;
(3) determining based on a second criterion that is different from said first criterion if said mobile phone is located outside a service range of a preferred communication system within said predetermined time period;
(4) connecting to a non-preferred communication system when said mobile phone is located outside a service range of said preferred communication system continuously for a predetermined time period;
(5) determining if said mobile phone is located within a service range of said preferred communication system while connecting to said non-preferred communication system; and
(6) connecting to said preferred communication system based on the determination in (5).

2. The method as claimed in claim 1 wherein said first and second criteria are threshold of received electric field intensity.

3. The method as claimed in claim 2, wherein said threshold of received electric field intensity is determined so that the threshold relating to said determination in (3) is higher than the threshold relating to said determination in (1).

4. A mobile phone comprising:
first determination means for determining based on a first criterion if said mobile phone is located outside a service range of a preferred communication system while connecting to said preferred communication system;
second determination means for determining if a predetermined time period passes;
third determination means for determining based on a second criterion that is different from said first criterion if said mobile phone is located outside a service range of a preferred communication system within said predetermined time period;
first connection means for connecting to a non-preferred communication system when said mobile phone is located outside a service range of said preferred communication system continuously for a predetermined time period;
fourth determination means for determining if said mobile phone is located within a service range of said preferred communication system while connecting to said non-preferred communication system; and
second connection means for connecting to said preferred communication system based on the determination of said fourth determination means.

5. The mobile phone as claimed in claim 4 wherein said first and second criteria are threshold of received electric field intensity.

6. The mobile phone as claimed in claim 5, wherein said threshold of received electric field intensity is determined so that the threshold relating to said third determination means is higher than the threshold relating to said first determination means.

7. A mobile phone comprising:
a first determination circuit for determining based on a first criterion if said mobile phone is located outside a service range of a preferred communication system while connecting to said preferred communication system;
a second determination circuit for determining if a predetermined time period passes;
a third determination circuit for determining based on a second criterion that is different from said first criterion if said mobile phone is located outside a service range of a preferred communication system within said predetermined time period;
a first switch for connecting to a non-preferred communication system when said mobile phone is located outside a service range of said preferred communication system continuously for a predetermined time period;
a fourth determination circuit for determining if said mobile phone is located within a service range of said preferred communication system while connecting to said non-preferred communication system; and
a second switch for connecting to said preferred communication system based on the determination of said fourth determination means.

8. The mobile phone as claimed in claim 7 wherein said first and second criteria are threshold of received electric field intensity.

9. The mobile phone as claimed in claim 8, wherein said threshold of received electric field intensity is determined so that the threshold relating to said third determination circuit is higher than the threshold relating to said first determination circuit.
